# EUROPEAN PATENT APPLICATION

(11) **EP 2 413 275 A1**
(43) Date of publication of application: **01.02.2012**
(21) Application number: 11175441.2
(22) Date of filing: 26.07.2011
(51) Int. Cl.: G06Q 10/00, G06K 19/10

(54) **A method for securing products and a system for securing products, especially pharmaceutical, with a use of leaflets**

(30) Priority: 27.07.2010 PL 39196610
(71) Applicant: Kea Spolka Jawna I.B. Baszak, 51-008 Wroclaw (PL)
(72) Inventor: Baszak, Bogdan, 51-008 Wroclaw (PL)
(74) Representative: Pawlowski, Adam

(57) **Abstract**

A method for securing products, especially pharmaceutical, with a use of leaflets carrying unique codes, characterised by comprising the steps of storing in a computer system the unique codes in a database of generated codes (41); providing to the product recipients a module for verifying codes (40), configured to read a code to be verified; verifying the code to be verified with the data of the database of generated codes (41); and providing information on code match.

## Description

The present invention relates to securing products, especially pharmaceutical, with a use of leaflets.

Securing products in order to protect them from forgery is an important issue, especially in case of products, which may have influence on health or life of their recipients, such as pharmaceutical products or comestible products. The recipient should have certainty that certain product is safe and originates from appropriate supplier, which guarantees its authenticity.

The known systems for securing products utilize codes placed on product packaging, the codes defining product properties such as production date, serial number or expiry date. They allow the recipient to perform a basic verification of the product. However, such safeguards do not protect the recipient from the use of a product that has been placed on the market by an unauthorised party and contains a copy of the marking provided by an authorised supplier.

Products may also have markings made with techniques that are difficult to forge, such as holograms. Holograms may be printed on product packaging, on an item accompanying the product, such as an information leaflet, or can be an additional attachment to the product. However, the advance of technology and printing devices has made it possible to forge also holograms fairly easily on a large scale. Therefore, holograms are presently not considered a safe security measure for products.

The aim of the present invention is to develop a method for securing products and a system for securing products, especially pharmaceutical, with a use of leaflets.

The object of the invention is a method for securing products, especially pharmaceutical, with a use of leaflets carrying unique codes, the method comprising the steps of storing in a computer system the unique codes in a database of generated codes ; providing to the product recipients a module for verifying codes, configured to read a code to be verified; verifying the code to be verified with the data of the database of generated codes ; and providing information on code match.

Preferably, the method further comprises the step of storing, in a database of verified codes, for each of verified code, data of history of verifications comprising at least the number of prior verifications, at least one date of prior verification and/or an identifier of the entity entering the code to be verified.

Preferably, the method further comprises the step of comparing the code to be verified with data of codes stored in the database of verified codes and providing data of history of verifications of the particular code to be verified.

Preferably, the data of history of verifications are provided as a notification about authenticity of a product for codes matching the data of the database of generated codes, a notification about lack of authenticity of a product for codes not matching the data of the database of generated codes, and a notification about possible lack of authenticity of a product for codes matching the data of both the database of generated codes and the database of verified codes.

Preferably, the generated codes comprise a product identifier, a production batch identifier and a product number in the batch.

Preferably, the product number in the batch is defined by a code having a base greater than 10, preferably 34.

Preferably, the code having a base of 34 comprises digits from 0 to 9 and Latin alphabet letters from A to N and from P to Z.

Preferably, the product number in the batch has the length of at least 5 characters.

Preferably, the method comprises the step of generating a set of random codes, the set comprising the number of codes lower than the maximum number allowed by the length of the product number in the batch.

Preferably, the module for verifying codes is accessible via a public network, preferably the Internet.

Preferably, the module for verifying codes is accessible via a dedicated data link, preferably a Virtual Private Network (VPN).

Another object of the present invention is a system for securing products, especially pharmaceutical, with a use of leaflets carrying unique codes, the system comprising a module for verifying codes with a database of generated codes obtained from a module for generating codes ; an input interface configured to read a code to be verified; a comparator connected to the database of generated codes and to the input interface, the comparator configured to verify a match of the code to be verified with the codes stored in the database of generated codes and to provide information about a match of the code via an output connected to an output interface configured to present information on code match.

Preferably, the module for verifying codes comprises a database of verified codes configured to store, for each of verified codes, data of history of verifications comprising at least the number of prior verifications, at least one date of prior verification and/or an identifier of the entity entering the code to be verified by the input interface.

Preferably, the comparator is connected to a database of verified codes and is configured to verify a code to be verified with the codes stored in the database of verified codes and to provide data of history of verifications of the particular code to be verified to the output interface.

Preferably, the output interface is configured to present data of history of verifications as a notification about authenticity of a product for codes matching the data of the database of generated codes, a notification about lack of authenticity of a product for codes not matching the data of the database of generated codes, and a notification about possible lack of authenticity of a product for codes matching the data of both the database of generated codes and the database of verified codes.

The present invention has been shown by means of preferred embodiments on a drawing, in which:
Fig. 1 presents an example of a product leaflet carrying a code;
Fig. 2 shows a diagram of a system for securing products according to the present invention;
Fig. 3 depicts a method for generating codes; and
Fig. 4 presents a method for verifying codes.

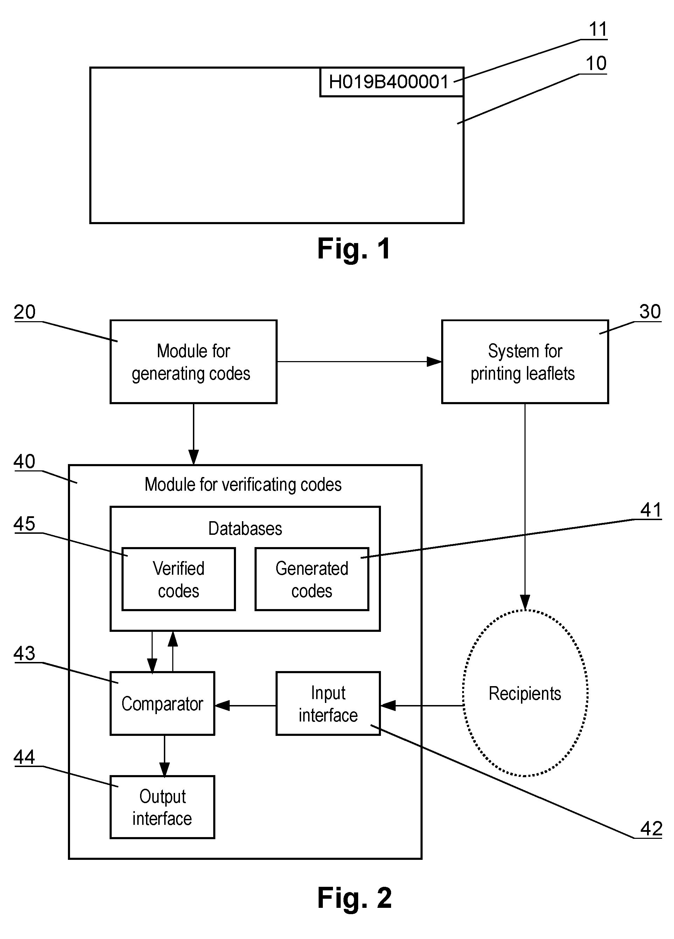

Fig. 1 presents an example of a product leaflet 10 with a code 11 printed thereon. The code 11 may be applied to the leaflet 10 by print, by programming an electronic tag embedded in the leaflet or as an additional carrier, for example a sticker or an electronic tag. The code 11 may have a form suitable for direct reading by a recipient, such as visible characters or Braille alphabet markers, or may have a form suitable for reading by a dedicated reader, such as markers visible in ultraviolet light, bar codes or data embedded in an IC chip.

Fig. 2 shows a diagram of a system for securing products according to the present invention. The system comprises a module for generating codes 20, configured to generate unique codes to be carried by leaflets. Preferably, the codes are generated in sets, whereas each set is assigned to a given production batch of a product. Preferably, the product code may comprise 11 characters, wherein:
- characters 1 - 3 determine product identifier, unique for each of the secured products, and match the code index.
- character 4 defines the year of production, for example digits from 0 to 9 define years 2000 - 2009 and following years are defined with letters, preferably A - 2010, B - 2011 - B, C - 2012 and so on;
- character 5 defines the month of production, wherein digits 1 to 9 reference January to September, A- October, B - November, C - December;
- character 6 is an incrementing number assigned to product batch or orders for the particular product identifier, which were manufactured in the particular year and month. Digits 1 to 9 define the first 9 batches and letters define the subsequent batches;
- (characters 4-6 may be called a production batch identifier)
- characters 7 to 11 define the product number for the particular production batch. A code having a base greater than 10 is preferably used, preferably 34 (10 digits + 24 letters), which allows for generating 34^5 unique identifiers. The numbering may comprise incremental identifiers or random identifiers. Preferably, while using letter marking, Latin alphabet letters are used apart from the letter O in order not to introduce a risk of confusion of the letter O with the digit 0.

For example, the code H019B400001 defines:
H01 - product identifier (index)
9 - production year - 2009
B - production month - November
4 - incremental identifier of the batch/order
00001 - incremental number of the product in the particular batch/order.

The codes are generated upon request of the operator of the module for generating codes 20, for example when the system receives information about a new batch of security products. The operator of the module for generating codes 20 inputs product parameters, preferably the product identifier, product batch identifier (production year, month, incremental batch identifier). Next, the module for generating codes automatically adds, to the provided data, identifiers of products in the batch, thereby creating a set of product codes. The module for generating codes may be configured such as to generate codes of different length, for example codes longer that 11 characters, in order to allow for marking a larger set of products.

The module for generating codes may also generate a set of random codes in a quantity lower than the maximum amount allowed by the product identifier length in a given product batch, so as to allow for only some of the possible combinations of characters to be used in a given product batch. For example, for an identifier of a product in a batch comprising a 5-character code having a base of 34, the number of random codes can be 34^4, which will result in a use of only 1/34 of the allowed codes. This makes it more difficult to generate codes by unauthorized parties that could imitate the set of original codes.

A set of codes of products is sent to a system for printing leaflets 30, in which the codes are applied on the leaflets to be added to products entering the market.

The set of product codes is also sent to a module for verifying codes 40, in which it is stored in a database of generated codes 41. Preferably, the module for verifying codes 40 and the module for generating codes 20 are components of the same device, for example a computer. Alternatively, the module for verifying codes 40 and the module for generating codes 20 may be different devices. In such a case they are preferably connected with a ciphered data transmission link in order to disallow access to product codes by unauthorized persons. The database of generated codes 41 stores all codes generated by the system according to the present invention in order to facilitate their verification by the recipients.

In another embodiment, the set of product codes can be sent to a server of the database of generated codes 41, which can be separate from the module for generating codes. In such a case the module for generating codes 40 shall have access to the database of generated codes 41.

The module for verifying codes 40 additionally comprises an input interface 42 configured to receive a code input by a recipient. Preferably, the input interface 42 is accessible via a public data network, preferably the Internet. The input interface 42 can be also accessible via a dedicated data exchange means, such as Virtual Private Network (VPN), a dedicated communication network among legal entities entering the products on the market, or pharmacy shops, wherein recipients may verify a purchased product in a safe manner. The input interface 42 may also be accessible via a paid data exchange channel, such as an SMS communication channel, wherein an SMS message is sent to an SMS gate with an increased tariff charge. The input interface 42 has preferably a form of an Internet web page with an input form by which a recipient may enter a code to be verified.

The recipient can input a code read from the purchased product via an input interface 42 to the module for verifying codes 40. The input code is processed by a comparator 43, configured to check a match between the input code and the codes stored in the database of generated codes 41. The comparison result is provided to the recipient by means of an output interface 44. The output interface 44 may utilize the same communication link as the input interface 42. It may also utilize a separate communication link, for example information regarding verification of the product may be notified via an e-mail, a voicemail or by means of an SMS message.

Additionally, the module for verifying codes 4 comprises a database of verified codes 45, which may be separate from the database of generated codes 41 or be a part thereof. The database of verified codes 45 stores information on codes verified by the recipients via the input interface 42, wherein the information comprises a flag marking the code as already verified, the number of prior verifications, the date(s) of verifications and/or the identifier of the verifying recipient. The data from the database of verified codes 45 may be fetched by the comparator 43 and passed to the recipient via the output interface 44 together with information on a match of a code with the database of generated codes.

Hence, the recipient may be provided with information on whether a given code has been already verified and if so, with additional information on how many times, when any by whom it has been verified. The identifier of the verifying recipient may be an identifier related to a device that is used by the recipient during verification of data, such as an IP address of a computer, a telephone number, or an identifier optionally provided by the recipient.

Informing the customers that the product code has been already verified allows avoiding product forgery by marking many unauthorized products by the same product code. By providing the date of verification and/or the identifier of the verifying recipient, the recipient has a possibility of verification whether a given code has been previously verified by himself. By storing in the database of verified codes 45 information on the number of verifications, it is possible to identify product codes that are verified too frequently by different recipients. This allows to publicly announce codes that are used on unauthorised products. The output interface 44 may present historical data in a simplified manner, namely:
- if the code matches with codes stored in the database of generated codes 41 and is verified for the first time, the output interface 44 informs about the authenticity of the product. Additionally, the system may provide a commercial name associated with the product code. This allows avoiding forgery by marking expensive products by codes copied from cheap products.
- if the code matches with codes stored in the database of generated codes 41 and has been previously verified - the output interface 44 informs about possible lack of authenticity, optionally providing the history of verifications so that a recipient may verify himself whether the prior verification was made by himself;
- if the code matches with codes stored in the database of generated codes 41 and has been verified many times, for example three times, - the output interface 44 informs about a highly possible lack of authenticity of the product, giving optionally a history of verifications;
- if the code does not match with codes stored in the database of generated codes 41 - the output interface 44 informs about the lack of authenticity of the product.

The module for generating codes 20, the input interface 42, the comparator 43 and the output interface 44 may be dedicated electronic circuits for carrying out the appropriate functions, which makes their reverse engineering more difficult for unauthorized parties. The modules may be placed in a single casing together with data carriers that hold the database of generated codes 41 and in the database of verified codes 45. The module for generating codes 20, the input interface 42, the comparator 43 and the output interface 44 may also be software modules, executed by one or more typical processors, installed in one or more computers. Hence, the system for securing products and the method for securing products may be implemented by a computer.

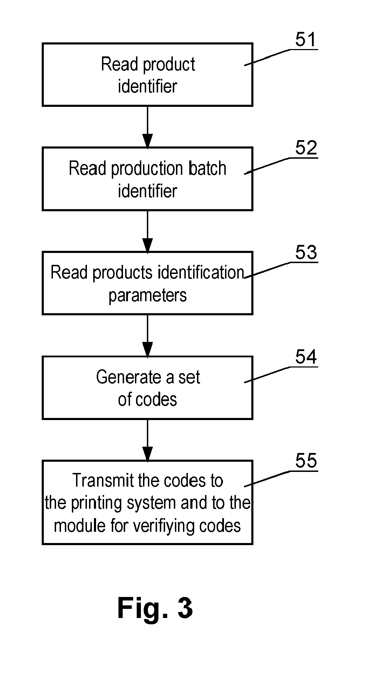

Fig. 3 depicts a method for generating codes executed by the module for generating codes 20. In the first step 51, a product identifier is read. Next, in step 52, the production batch identifier is read, which may comprise production year, production month and/or incremental number. Optionally, in step 53, parameters of products identification may be read, such as code length, code base, and in case of random code generation, a code fill factor defining the number of codes to be generated out of the whole range defined by the code length and the code base. Next, in step 54 a set of codes is generated on the basis of the read parameters. The generated set of codes is sent, in step 55 to a system for printing leaflets 30, which conveys the generated codes to the information leaflets and to the module for verifying codes 40 that stores the generated codes in the database of generated codes 41.

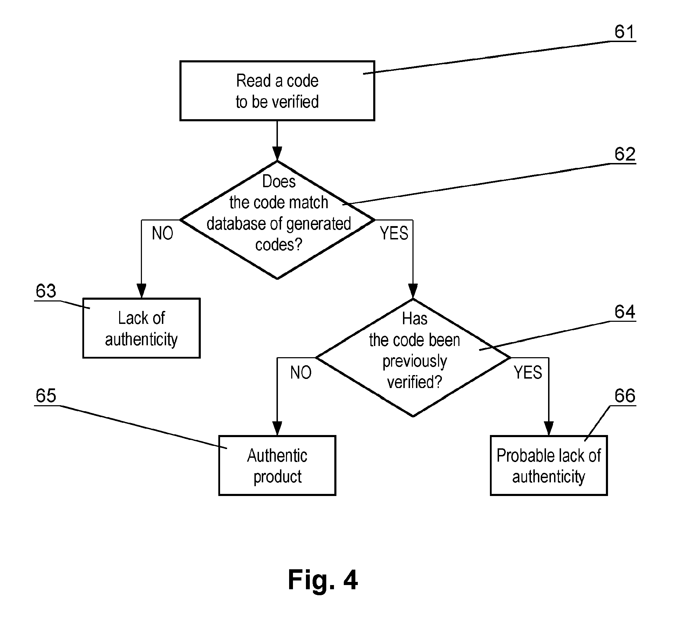

Fig. 4 presents a method for verifying codes executed by the module for verifying codes 40. In the firsts step 61, a code to be verified is read by the input interface 42. Next, in step 62, by the use of the comparator 43, the read code is compared with codes stored in the database of generated codes 41. If the code is not present in the database of generated codes, then in step 63 there is provided a notification on lack of match of the code, and preferably a notification on lack of authenticity of the product. In case the code is present in the database of generated codes 41, in step 64 the history of verifications may be checked by analyzing the number of verifications. If the code has not been previously verified, then in step 65 a notification about authenticity of a product is output. If the code has been previously verified, then is step 66 a notification about possibility of lack of authenticity of a product is output together with the verification history.

The system and method for securing products, especially pharmaceutical products, with a use of leaflets according to the present invention allow the recipient for an effective verification of the authenticity of products. By using interface for verifying codes, a recipient has a possibility of verifying whether a given code carried by the product leaflet is authentic. Additionally, the recipient may be given information on whether a given code has previously been verified, i.e. whether it is unique and has not been applied to more than one leaflet. The use of a code on an information leaflet allows for production of the leaflet by a party not linked to the manufacturer of the product. Hence, the leaflets may be printed by one party, administering the system for securing products, for a plurality of manufacturers of different products, preferably pharmaceutical products. Making the system centralised increases the level of security for products.

## Claims

1. A method for securing products, especially pharmaceutical, with a use of leaflets carrying unique codes, **characterised by** comprising the steps of:
- storing in a computer system the unique codes in a database of generated codes (41);
- providing to the product recipients a module for verifying codes (40), configured to read a code to be verified;
- verifying the code to be verified with the data of the database of generated codes (41); and
- providing information on code match.

2. The method according to claim 1, **characterised by** storing in a database of verified codes (45), for each of verified code, data of history of verifications comprising at least the number of prior verifications, at least one date of prior verification and/or an identifier of the entity entering the code to be verified.

3. The method according to claim 2, **characterised by** further comparing the code to be verified with data of codes stored in the database of verified codes (45) and providing data of history of verifications of the particular code to be verified.

4. The method according to claim 2, **characterised in that** the data of history of verifications are provided as a notification about authenticity of a product for codes matching the data of the database of generated codes (41), a notification about lack of authenticity of a product for codes not matching the data of the database of generated codes (41), and a notification about possible lack of authenticity of a product for codes matching the data of both the database of generated codes (41) and the database of verified codes (45).

5. The method according to any of previous claims, **characterised in that** the generated codes comprise a product identifier, a production batch identifier and a product number in the batch.

6. The method according to claim 5, **characterised in that** the product number in the batch is defined by a code having a base greater than 10, preferably 34.

7. The method according to claim 6, **characterised in that** the code having a base of 34 comprises digits from 0 to 9 and Latin alphabet letters from A to N and from P to Z.

8. The method according to claim 5, **characterised in that** the product number in the batch has the length of at least 5 characters.

9. The method according to claim 5, **characterised by** generating a set of random codes, the set comprising the number of codes lower than the maximum number allowed by the length of the product number in the batch.

10. The method according to any of previous claims, **characterised in that** the module for verifying codes (40) is accessible via a public network, preferably the Internet.

11. The method according to any of previous claims, **characterised in that** the module for verifying codes is accessible via a dedicated data link, preferably a Virtual Private Network (VPN).

12. A system for securing products, especially pharmaceutical, with a use of leaflets carrying unique codes, the system **characterised in that** it comprises:
- a module for verifying codes (40) with a database of generated codes (41) obtained from a module for generating codes (20);
- an input interface (42) configured to read a code to be verified;
- a comparator (43) connected to the database of generated codes (41) and to the input interface (42), the comparator (43) configured to verify a match of the code to be verified with the codes stored in the database of generated codes (41) and to provide information about a match of the code via an output connected to an output interface (44) configured to present information on code match.

13. The system according to claim 12 **characterised in that** the module for verifying codes (40) comprises a database of verified codes (45) configured to store, for each of verified codes, data of history of verifications comprising at least the number of prior verifications, at least one date of prior verification and/or an identifier of the entity entering the code to be verified by the input interface (42).

14. The system according to claim 13 **characterised in that** the comparator (43) is connected to a database of verified codes (45) and is configured to verify a code to be verified with the codes stored in the database of verified codes (45) and to provide data of history of verifications of the particular code to be verified to the output interface (44).

15. The system according to claim 14 **characterised in that** the output interface (44) is configured to present data of history of verifications as a notification about authenticity of a product for codes matching the data of the database of generated codes (41), a notification about lack of authenticity of a product for codes not matching the data of the database of generated codes (41), and a notification about possible lack of authenticity of a product for codes matching the data of both the database of generated codes (41) and the database of verified codes (45).
